# FASCICULE DE BREVET EUROPEEN

(11) **EP 1 625 967 B1**
(45) Date de publication et mention de la délivrance du brevet: **17.10.2007**
(21) Numéro de dépôt: 04019327.8
(22) Date de dépôt: 14.08.2004
(51) Int. Cl.: B60N 2/28

(54) **Siège auto pour enfant, pivotant entre une position face à la route et une position face à une portière, à retour automatique en position face à la route**
Autokindersitz, schwenkbar zwischen einer nach vorne und einer türwärts gerichteten Position , mit einer automatischen Rückstellung nach vorne
Child car seat, turnable between a forward-facing position and a door-facing position, with automatic return to the forward-facing position

(43) Date de publication de la demande: 15.02.2006
(73) Titulaire: DOREL FRANCE SA, 49309 Cholet (FR)
(72) Inventeur: Biaud, Richard, 49340 Trementines (FR)
(74) Mandataire: Bioret, Ludovic

(56) Documents cités:
- EP-A- 0 656 277
- DE-A- 10 017 215
- DE-A- 10 120 769
- US-A- 2 822 858
- US-A- 2 992 852
- US-A- 4 802 706
- US-A- 5 136 221
- US-A1- 2001 048 237

## Description

Le domaine de l'invention est celui de la puériculture. Plus précisément, l'invention concerne les sièges pour enfant destinés à être installés dans un véhicule.

Dans ces sièges auto, une des difficultés est l'accessibilité, du fait notamment de l'espace réduit laissé par la portière et le siège du véhicule. Il est généralement peu aisé d'installer l'enfant dans le siège, ou de l'extraire de celui-ci.

Pour faciliter l'installation de l'enfant, il a notamment été proposé de rendre pivotant le siège par rapport à une embase ou une structure fixe, le siège étant susceptible d'être déplacé entre deux positions :
- une position d'installation de l'enfant, face à une portière latérale (il y a en général deux positions d'installation, le siège pouvant tourner à gauche ou à droite) ;
- une position de transport, face à la route.

L'invention concerne en particulier ce type de sièges pour enfant.

La position d'installation n'est bien sûr qu'une position temporaire. Lorsque le véhicule roule, le siège doit impérativement être dans la position de transport, parfaitement face à la route, pour des raisons de sécurité évidentes.

Cependant, il peut arriver que, après avoir installé et attaché l'enfant dans le siège, celui-ci soit insuffisamment ramené vers une position face à la route, sans que le siège atteigne vraiment cette position. Le siège est alors dans une position intermédiaire, relativement proche de la position de transport.

Il n'est en effet pas toujours facile de contrôler que le siège se trouve bien dans la position de transport, et non dans une position proche, mais non acceptable.

Une telle situation n'est en effet pas sans risque. En effet, tous les éléments de sécurité prévus sur les sièges pour enfants sont conçus et optimisés pour assurer le maintien de l'enfant en cas de choc éventuel dans la mesure où le siège occupe une position parfaitement face à la route.

En outre, le siège risque de se déplacer en rotation, par exemple en cas de virages.

Un siège auto pour enfant de ce type est connu de US 2001/048237, qui montre toutes les caractéristiques du préambule de la revendication 1.

L'invention a notamment pour objectif de pallier ces inconvénients de l'art antérieur.

Plus précisément, l'invention a pour objectif de proposer un siège pour enfant dont l'assise est mobile entre une position de transport et une position de l'installation de l'enfant, qui garantisse une position de transport correcte en toutes situations.

L'invention a également pour objectif de fournir un tel siège pour enfant qui facilite encore l'installation de l'enfant dans le siège.

L'invention a aussi pour objectif de fournir un tel siège qui soit simple de conception, facile à fabriquer et à monter.

Un autre objectif de l'invention est de fournir un tel siège qui puisse être installé dans un véhicule de façon simple et rapide.

Ces objectifs, ainsi que d'autres qui apparaîtront plus clairement par la suite, sont atteints à l'aide d'un siège auto pour enfant, destiné à être monté sur un siège passager d'un véhicule automobile, comprenant une assise montée pivotante sur une embase fixe de façon que le siège puisse être orienté selon au moins deux positions, une position de voyage, face à la route, et au moins une position d'installation, face à une portière latérale. Ce siège auto comprend, selon l'invention, des moyens de rappel tendant à ramener ladite assise dans ladite position de voyage, qui sont :
- inactifs, ou débrayés, sur une première portion angulaire, débutant en position d'installation et s'arrêtant en une position intermédiaire prédéfinie, le déplacement sur cette première portion angulaire étant assuré manuellement par l'utilisateur ;
- actifs, ou embrayés, sur une seconde portion angulaire, terminale, débutant à ladite position intermédiaire prédéfinie, et s'arrêtant à ladite position de voyage, de façon que le siège soit systématiquement ramené dans la position de voyage, sans action manuelle de l'utilisateur, lorsqu'il se trouve dans ladite seconde portion angulaire.

Ainsi, l'assise reprend automatiquement la position précise face à la route, même si l'utilisateur ne l'a pas correctement repositionnée. L'enfant est donc toujours en sécurité (le verrouillage en position étant correct).

Les moyens de rappel ne sont donc pas actifs lorsque l'enfant est en cours d'installation, pour qu'il ne soit pas nécessaire de retenir simultanément le siège, pour l'empêcher de revenir dans la position de transport.

Ces moyens de rappel deviennent effectifs en fin de course. Il suffit à l'utilisateur d'effectuer une partie du déplacement, ou d'initier celui-ci, pour que les moyens de rappel prennent le relais, et finalisent la mise en place correcte en position de transport.

On évite ainsi les mauvaises mises en place (replacement non terminé, et donc siège non ou mal verrouillé), même si l'utilisateur n'effectue pas le replacement jusqu'au bout.

De façon préférentielle, le siège auto comprend deux positions d'installation, adaptées respectivement à un montage à gauche ou à droite dans un véhicule, et lesdits moyens de rappel sont symétriques, pour permettre de ramener ledit siège dans ladite position de voyage de la même façon à partir de l'une ou de l'autre des positions d'installation.

Dans un mode de réalisation avantageux, lesdits moyens de rappel comprennent au moins un élément monté mobile sur ladite embase fixe entre une position embrayée dans laquelle ledit élément mobile coopère avec un logement ménagé dans ladite platine et une position débrayée selon laquelle ledit élément mobile est en retrait dudit logement.

Avantageusement, le siège présente une platine pivotante formant une came dans laquelle est défini au moins un logement dont au moins un des bords forme un point d'appui pour lesdits moyens de rappel.

De façon avantageuse, ladite platine pivotante présente un unique logement dont chacun des bords forme un point d'appui pour chacun desdits ensembles respectivement.

Selon un autre aspect préférentiel de l'invention, lesdits moyens de rappel coopèrent avec au moins un élément mobile monté pivotant sur ladite embase. Dans ce cas, ledit ou lesdits éléments mobiles comprennent avantageusement au moins un bras d'entraînement susceptible de pénétrer ledit logement de ladite platine et au moins un bras de rappel s'étendant à l'opposé dudit bras d'entraînement par rapport à l'axe de rotation dudit élément mobile.

Préférentiellement, ledit bras de rappel est couplé à des moyens élastiques tendant à favoriser l'engagement dudit bras d'entraînement dans un logement de ladite platine.

De façon avantageuse, on prévoit des moyens de limitation de la rotation dudit élément mobile.

Selon différents modes de réalisation avantageux de l'invention, le siège comprend des moyens de contrôle de l'embrayage et/ou du débrayage desdits moyens de rappel, tenant compte d'au moins un des aspects appartenant au groupe comprenant :
- la détection de la présence d'un enfant dans ledit siège ;
- la détection du verrouillage du harnais dudit siège ;
- une commande d'un utilisateur.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 sont des vues partielles d'un siège pour enfant selon l'invention, les moyens de rappel de la platine vers la position face à la route étant respectivement embrayés et débrayés ;
- les figures 3 et 4 sont des vues en perspective, respectivement de dessus et de dessous, d'une embase pourvue de moyens d'accrochage et destinée à équiper un siège selon l'invention ;
- les figures 5 et 6 sont des vues en perspective des pièces latérales d'une embase telle qu'illustrée par les figures 3 et 4.

Tel que déjà indiqué précédemment, le principe de l'invention consiste à associer la platine d'un siège pivotant à des moyens de rappel destinés à ramener le siège en position face à la route.

Ces moyens de rappel peuvent agir en permanence et/ou en toutes positions du siège. Selon le mode de réalisation préférentiel décrit ci-après, ces moyens de rappel agissant uniquement sur une portion finale de la rotation du siège. En d'autres termes, ils assurent la fin du retour dans la position correcte, lorsque l'utilisateur a manuellement initié le mouvement, une fois l'enfant correctement installé.

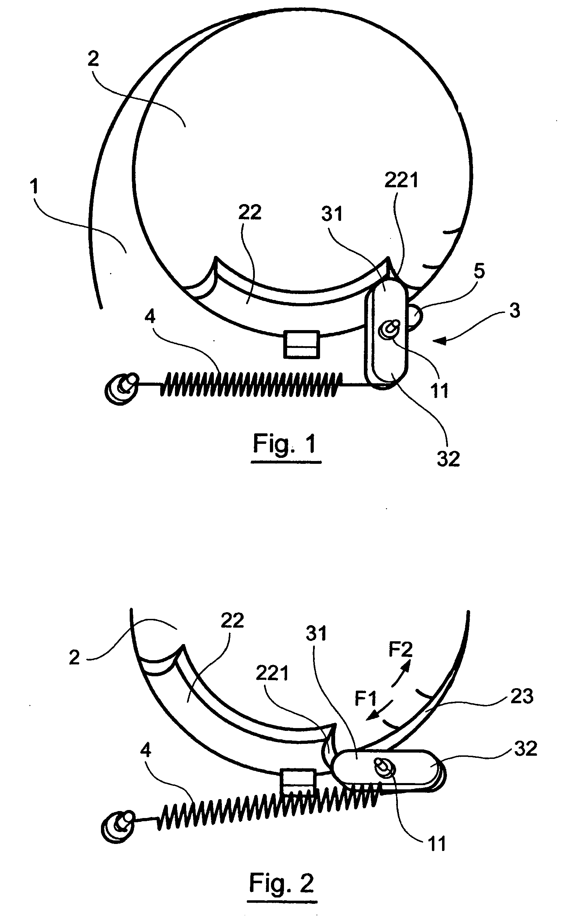

Les figures 1 et 2 illustrent ce principe général de l'invention.

Tel qu'illustré sur ces figures, l'assise d'un siège pivotant solidaire d'une platine 2 montée pivotante sur une embase 1 entre une position face à la route (telle qu'elle apparaît sur la figure 1) et une position face à une portière dans laquelle la platine est pivotée d'environ 45° par rapport à la position face à la route.

Selon le présent mode de réalisation de l'invention, les moyens de rappel équipant le siège comprennent un élément mobile 3 monté pivotant sur l'embase 1 autour d'un axe 11. Cet élément mobile 3 présente deux bras (diamétralement opposés par rapport à l'axe 11) :
- un bras d'entraînement 31 destiné à pénétrer une encoche 22 s'étendant sur une fraction de la périphérie de la platine 2 ;
- un bras de rappel 32, couplé à un ressort 4.

Tel que cela apparaît sur les figures 1 et 2, le bras d'entraînement 31 est mobile entre une position embrayée dans laquelle il est engagé dans l'encoche 22, formant logement, et une position débrayée dans laquelle il est retiré de cette encoche 22.

On note que le montage du ressort 4 avec le bras de rappel 32 est prévu de façon à favoriser l'engagement du bras d'entraînement 31 dans l'encoche 22 de la platine 2.

Généralement, le siège comprend également des deuxièmes moyens de rappel débrayables symétriques (non représentés par simplification), qui, lorsqu'ils sont embrayés, agissent sur la platine 2 de façon à ramener celle-ci dans une position face à une portière. De tels deuxièmes moyens de rappel sont du même type que ceux décrits pour la position face à la route, et sont montés de façon à coopérer avec l'encoche 22, à l'extrémité opposée de celle au voisinage de laquelle sont montés les moyens de rappel face à la route. Cela permet de pouvoir placer le siège aussi bien à gauche qu'à droite, dans le véhicule.

Le fonctionnement des moyens de rappel débrayables qui viennent d'être décrits va maintenant être expliqué.

Pour la description qui va suivre, la position de départ est celle illustrée par la figure 1, c'est-à-dire une position face à la route.

Lorsque l'utilisateur commence à pivoter le siège vers une position d'installation dans le sens indiqué par la flèche F1 sur la figure 2, la paroi 221 de l'encoche 22 pousse le bras d'entraînement 31 également dans le sens de la flèche F1 jusqu'à ce que celui-ci soit retiré de l'encoche 22 et occupe une position débrayée, en appui contre la paroi périphérique 23 de la platine 2.

A partir de ce moment, l'utilisateur peut continuer à pivoter le siège librement, c'est-à-dire sans que la force des moyens de rappel s'exercent sur la platine, ceux-ci étant en position débrayée.

On note que l'obtention de la position face à la portière peut être facilitée par des deuxièmes moyens de rappel mentionnés précédemment.

Pour obtenir le retour du siège dans une position face à la route, l'utilisateur commence à pivoter le siège dans le sens indiqué par la flèche F2 sur la figure 2, jusqu'à ce que la paroi 221 de l'encoche 22 arrive au niveau du bras d'entraînement 31.

A ce stade, au fur et à mesure que l'encoche 22 s'étend devant le bras de rappel 31, ce dernier pivote vers l'intérieur de l'encoche 22 et s'engage dans celle-ci, ceci sous l'effet du ressort 4 qui agit sur le bras de rappel 32.

Une fois que le bras 31 commence à s'engager dans l'encoche 22, c'est l'action du ressort 4 qui prend le relais pour faire pivoter la platine 2 jusqu'à sa position face à la route, ceci par l'intermédiaire du bras 31 qui pousse sur la paroi 221 de l'encoche 22.

Pour limiter la rotation des moyens de rappel 3, on prévoit une butée 5 montée sur l'embase 1 et positionnée de telle sorte que, lorsque le bras 31 est en appui sur cette butée 5, il reste engagé dans l'encoche 22.

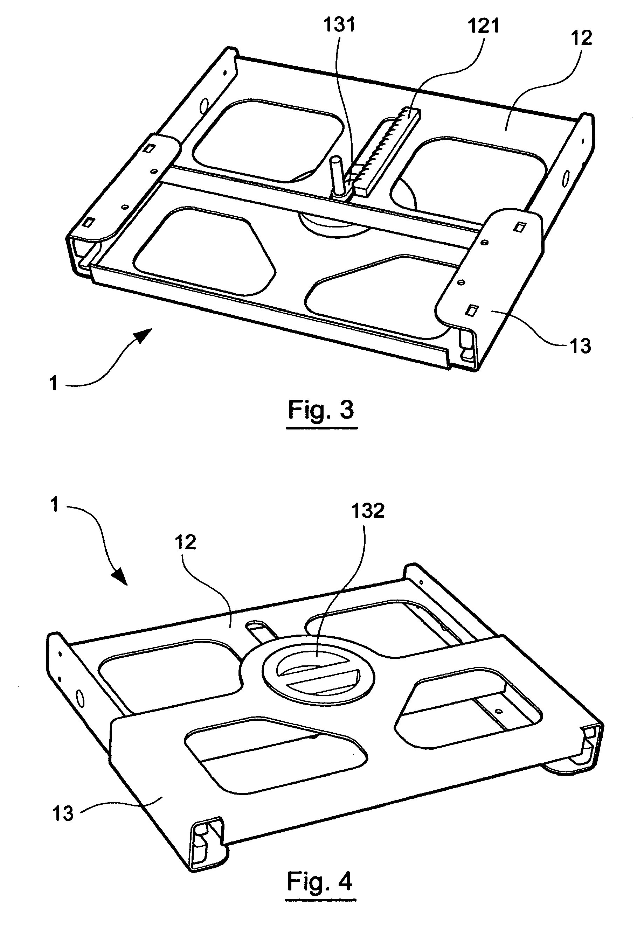

Le siège pivotant qui vient d'être décrit est avantageusement monté sur une embase 1 selon le standard « isofix » telle qu'illustrée par les figures 3 et 4. Cette embase présente des moyens d'accrochage à un élément de structure fixe faisant saillie à la base du dossier du siège arrière du véhicule.

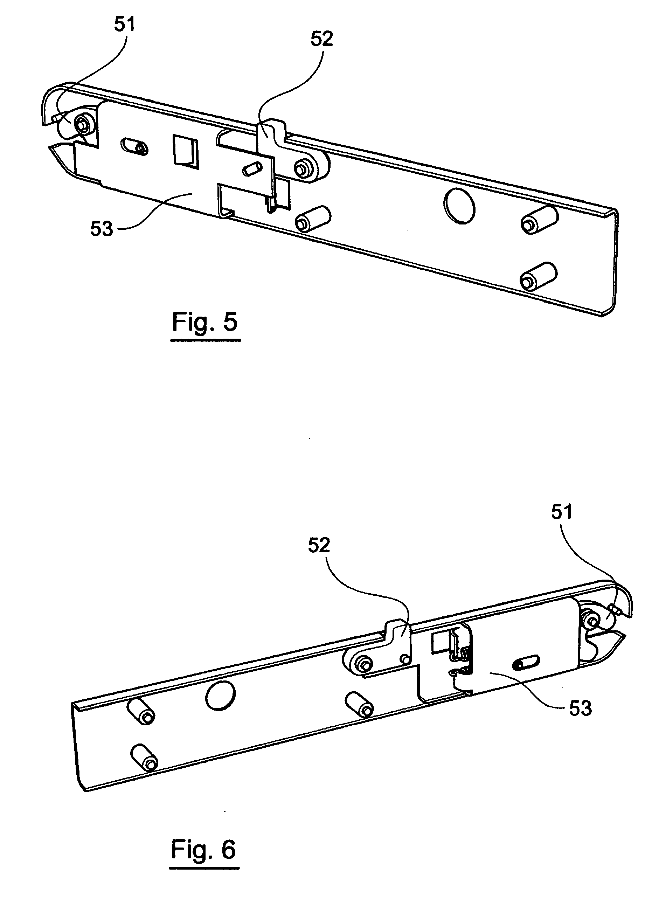

En référence aux figures 5 et 6, les moyens d'accrochage sont prévus de chaque côté de l'embase 1 et présentent à leur extrémité des pinces 51 couplées à des moyens de verrouillage/déverrouillage incluant notamment un levier pivotant 52 susceptible d'agir sur une pièce mobile en translation 53.

On note qu'un câble (non représenté) est prévu pour actionner le verrouillage/déverrouillage de chaque pince 51. Ce câble s'étend de façon à être accessible aux extrémités 511 de chaque élément latéral incluant une pince 51.

Tel que cela apparaît sur les figures 3 et 4, ces moyens d'accrochage sont solidaires d'un ensemble formant tiroir 12 destiné à coulisser par rapport à un élément de base 13, de telle sorte que les moyens d'accrochage soient mobiles entre une position déployée (correspondant à la position dans laquelle ils permettent l'accrochage du siège au véhicule) et une position escamotée limitant l'encombrement de l'embase en vue par exemple de son rangement.

De plus, cette embase 1 comprend des moyens pour bloquer ou débloquer la position du tiroir 12 par rapport à l'élément de base 13. La position de ce tiroir est réglable, pour permettre une adaptation à tous les véhicules (le dossier du siège devant dans tous les cas venir en appui contre celui du véhicule).

Selon le présent mode de réalisation, ces moyens de blocage/déblocage comprennent un levier pivotant 131 solidaire de l'élément de base 13 et destiné à coopérer avec une crémaillère 121 solidaire du tiroir 12. On note que le levier 131 est couplé à des moyens de rappel élastiques (non représentés) qui tendent à le ramener dans une position engagée avec la crémaillère 121.

Ce levier 131 est porté par un axe solidaire en rotation d'une poignée 132, formant moyens de commande du blocage/déblocage de la position du tiroir 12 par rapport à l'élément de base 13, ceci en permettant d'agir, par le dessous de l'embase, sur la position angulaire du levier 131 en vue d'engager celui-ci avec la crémaillère 121 ou de le désengager de celle-ci.

Ainsi, lors de la mise en place du siège dans le véhicule, le tiroir (et donc les pinces) est en position déployée. Les pinces sont enclenchées et verrouillées sur l'élément de structure fixe prévu à cet effet sur le véhicule.

Il suffit alors de repousser le siège vers le dossier du siège véhicule pour ramener le tiroir 12 vers une position escamotée, ceci étant permis par l'orientation de la denture de la crémaillère. A l'inverse, le redéploiement du tiroir est bloqué par le système crémaillère/levier et il est nécessaire d'agir sur la poignée 132 pour obtenir la mobilité du tiroir 12 par rapport à l'élément de base 13.

On comprend donc que le système crémaillère/levier assure le maintien du tiroir par rapport à l'élément de l'embase, en particulier en cas de choc du véhicule.

Dans un mode de réalisation simplifié, les moyens de rappel peuvent agir en permanence sur le siège. Dans ce cas, on peut prévoir un moyen de blocage en position face à la porte, que l'utilisateur libère lorsque l'enfant est installé. Le siège reprend alors seul la position face à la route.

On peut également prévoir que la mise en oeuvre des moyens de rappel soient fonction de divers paramètres, indépendamment et/ou simultanément, tels que la détection de la présence d'un enfant (par exemple par détection d'un poids supérieur à un seuil donné), la détection du verrouillage du harnais de l'enfant, une commande manuelle de l'utilisateur, la détection de la fermeture de la portière du véhicule,...

## Revendications

1. Siège auto pour enfant, destiné à être monté sur un siège passager d'un véhicule automobile, comprenant une assise montée pivotante sur une embase fixe de façon que le siège puisse être orienté selon au moins deux positions, une position de voyage, face à la route, et au moins une position d'installation, face à une portière latérale, comprenant des moyens de rappel (3, 4) tendant à ramener ladite assise dans ladite position de voyage,
**caractérisé en ce que** lesdits moyens de rappel (3, 4) sont :
- inactifs, ou débrayés, sur une première portion angulaire, débutant en position d'installation et s'arrêtant en une position intermédiaire prédéfinie, le déplacement sur cette première portion angulaire étant assuré manuellement par l'utilisateur ;
- actifs, ou embrayés, sur une seconde portion angulaire, terminale, débutant à ladite position intermédiaire prédéfinie, et s'arrêtant à ladite position de voyage, de façon que le siège soit systématiquement ramené dans la position de voyage, sans action manuelle de l'utilisateur, lorsqu'il se trouve dans ladite seconde portion angulaire.

2. Siège auto pour enfant selon la revendication 1, **caractérisé en ce qu'**il comprend deux positions d'installation, adaptées respectivement à un montage à gauche ou à droite dans un véhicule, et **en ce que** lesdits moyens de rappel sont symétriques, pour permettre de ramener ledit siège dans ladite position de voyage de la même façon à partir de l'une ou de l'autre des positions d'installation.

3. Siège auto pour enfant selon la revendication 1 ou 2, **caractérisé en ce que** lesdits moyens de rappel comprennent au moins un élément monté mobile (3) sur ladite embase (1) fixe entre une position embrayée dans laquelle ledit élément mobile coopère avec un logement (22) ménagé dans ladite platine (2) et une position débrayée selon laquelle ledit élément mobile (3) est en retrait dudit logement (22).

4. Siège auto pour enfant selon l'une quelconque des revendications précédentes, **caractérisé en ce qu'**il présente une platine pivotante formant une came dans laquelle est défini au moins un logement dont au moins un des bords forme un point d'appui pour lesdits moyens de rappel.

5. Siège auto pour enfant selon l'une quelconque des revendications 1 à 4, **caractérisé en ce que** ladite platine pivotante présente un unique logement dont chacun des bords forme un point d'appui pour chacun desdits ensembles respectivement.

6. Siège auto pour enfant selon l'une quelconque des revendications 1 à 5, **caractérisé en ce que** lesdits moyens de rappel coopèrent avec au moins un élément mobile (3) monté pivotant sur ladite embase (1).

7. Siège auto pour enfant selon la revendication 6, **caractérisé en ce que** ledit ou lesdits éléments mobiles (3) comprennent au moins un bras d'entraînement (31) susceptible de pénétrer ledit logement (22) de ladite platine (2) et au moins un bras de rappel (32) s'étendant à l'opposé dudit bras d'entraînement (31) par rapport à l'axe de rotation dudit élément mobile (3).

8. Siège auto pour enfant selon la revendication 7, **caractérisé en ce que** ledit bras de rappel (31) est couplé à des moyens élastiques (4) tendant à favoriser l'engagement dudit bras d'entraînement (31) dans un logement (22) de ladite platine (2).

9. Siège auto pour enfant selon l'une des revendications 1 à 8, **caractérisé en ce qu'**il comprend des moyens de limitation de la rotation dudit élément mobile (3).

10. Siège auto pour enfant selon la revendication 1, **caractérisé en ce qu'**il comprend des moyens de contrôle de l'embrayage et/ou du débrayage desdits moyens de rappel, tenant compte d'au moins un des aspects appartenant au groupe comprenant :
- la détection de la présence d'un enfant dans ledit siège ;
- la détection du verrouillage du harnais dudit siège ;
- une commande d'un utilisateur.

## Claims

1. Child car seat, intended to be assembled on a passenger seat of a motor car, comprising a swivel seating part assembled on a fixed base so that the seat can be orientated according to at least two positions, a travelling position, forward facing, and at least one installing position, facing the side door, comprising return means (3, 4) with the tendency of returning said seating part to said travelling position,
**characterised in that** said return means (3, 4) are:
- inactive, or disengaged, on a first angular section, starting from the installing position and ending at a pre-set intermediary position, the movement along this first angular section being manually ensured by the user;
- active, or engaged, on a second final angular section, starting from said pre-set intermediary position and ending at said travelling position, so that the seat is systematically returned to the travelling position, without any manual intervention from the user, when it is in said second angular section.

2. Child car seat according to claim 1, **characterised in that** it comprises two installing positions, respectively adapted to left or right fitting in the car, and **in that** said return means are symmetric, so as to allow to return said seat to said travelling position in the same manner from one or other of the installing positions.

3. Child car seat according to claim 1 or 2, **characterised in that** said return means comprise at least one moveable element (3) assembled on said fixed base (1) between an engaged position in which said moveable element collaborates with a housing (22) made in said plate (2) and a disengaged position according to which said moveable element (3) is in recess from said housing (22).

4. Child car seat according to any of the previous claims, **characterised in that** it has a swivel plate forming a cam in which lies at least a housing of which at least one of the edges creates a point of application for said return means.

5. Child car seat according to any of claims 1 to 4, **characterised in that** said swivel plate has a single housing whose edges each create a point of application for each of said respective bodies

6. Child car seat according to any of claims 1 to 5, **characterised in that** said return means collaborate with at least one moveable element (3) assembled so as to swivel on said base (1).

7. Child car seat according to claim 6, **characterised in that** said moveable element(s) (3) comprise at least one drive arm (31) likely to penetrate said housing (22) of said plate (2) and at least one return arm (32) extending opposite said drive arm (31) in relation to the axis of rotation of said moveable element (3).

8. Child car seat according to claim 7, **characterised in that** said return arm (31) is coupled to elastic means (4) tending to help the engaging of said drive arm (31) into a housing (22) of said plate (2).

9. Child car seat according to one of claims 1 to 8, **characterised in that** it comprises means for limiting the rotation of said moveable element (3).

10. Child car seat according to claim 1, **characterised in that** it comprises means for controlling the engaging and/or disengaging of said return means, taking into account at least one of the aspects belonging to the group comprising:
- the detection of a child in said seat;
- the detection of the locking of the harness of said seat;
- an order from a user.

## Patentansprüche

1. Autositz für Kinder zum Anbringen auf einen Fahrgastsitz eines Kraftfahrzeugs, der ein Sitzteil umfasst, welches schwenkbar auf einem feststehenden Grundteil angebracht ist, so dass der Sitz sich nach mindestens zwei Positionen einstellen lässt, nämlich eine Reiseposition in Fahrtrichtung und mindestens eine Position zum Hineinsetzen, die zu einer Fahrzeugseitentür hin gerichtet ist und wobei der Sitz Rückholmittel (3, 4) aufweist, die bestrebt sind, das Sitzteil in die Reiseposition zurückzuholen,
**dadurch gekennzeichnet, dass** die Rückholmittel (3, 4):
- über einen ersten Winkelabschnitt inaktiv oder ausgeklinkt sind, angefangen bei der Position zum Hineinsetzen und bei einer vorbestimmten Zwischenposition endend, wobei die Bewegung über diesen ersten Winkelabschnitt vom Benutzer manuell ausgeführt wird;
- über einen zweiten Winkelendabschnitt aktiv oder eingeklinkt sind, angefangen bei der besagten vorbestimmten Zwischenposition und bei der Reiseposition endend, so dass der Sitz systematisch, ohne manuelle Betätigung seitens des Benutzers, in die Reiseposition zurückgeführt wird, wenn sich der Sitz in dem besagten, zweiten Winkelabschnitt befindet.

2. Autokindersitz nach Anspruch 1, **dadurch gekennzeichnet, dass** er zwei Positionen zum Hineinsetzen aufweist, die jeweils dem Einbau auf der linken bzw. auf der rechten Fahrzeugseite angepasst sind und, dass die besagten Rückholmittel symmetrisch sind, um das Rückführen des Sitzes in die Reiseposition in gleicher Weise aus der einen oder anderen Position zum Hineinsetzen zu gewährleisten.

3. Autokindersitz nach einem der Ansprüche 1 oder 2, **dadurch gekennzeichnet, dass** die besagten Rückholmittel mindestens ein beweglich auf dem feststehenden Grundteil (1) angebrachtes Element (3) aufweisen, wobei dieses Element zwischen einer eingeklinkten Position, bei der es mit einer in besagter Platte (2) angebrachten Aussparung (22) zusammenwirkt und einer ausgeklinkten Position beweglich ist, bei der das bewegliche Element (3) gegenüber der Aussparung (22) zurück verschoben ist.

4. Autokindersitz nach einem der vorherigen Ansprüche, **dadurch gekennzeichnet, dass** er eine schwenkbare Platte aufweist, die einen Nocken bildet, in dem mindestens eine Aussparung ausgebildet ist, wobei mindestens ein Rand dieser Aussparung eine Abstützung für die besagten Rückholmittel bildet.

5. Autokindersitz nach einem der Ansprüche 1 bis 4, **dadurch gekennzeichnet, dass** die schwenkbare Platte eine einzige Aussparung aufweist, wobei jeder Rand dieser Aussparung jeweils eine Abstützung für jede der besagten Gruppen bildet.

6. Autokindersitz nach einem der Ansprüche 1 bis 5, **dadurch gekennzeichnet, dass** die besagten Rückholmittel mit mindestens einem beweglichen Element (3) zusammenwirken, das schwenkbar auf dem Grundteil (1) eingesetzt ist.

7. Autokindersitz nach Anspruch 6, **dadurch gekennzeichnet, dass** das bewegliche Element oder die beweglichen Elemente (3) mindestens einen Mitnahmehebel (31) aufweist bzw. aufweisen, der bzw. die in die Aussparung (22) der Platte (2) eingreifen kann bzw. können sowie mindestens einen Rückholhebel (32), der sich in entgegengesetzter Richtung zum Mitnahmehebel (31) im Verhältnis zur Drehachse des beweglichen Elementes (3) erstreckt.

8. Autokindersitz nach Anspruch 7, **dadurch gekennzeichnet, dass** der Mitnahmehebel (31) mit elastischen Mitteln (4) gekoppelt ist, welche das Eingreifen des besagten Mitnahmehebels (31) in eine Aussparung (22) der Grundplatte (2) begünstigt.

9. > Autokindersitz nach einem der Ansprüche 1 bis 8, **dadurch gekennzeichnet, dass** er Mittel zum Begrenzen der Drehung des beweglichen Elementes (3) aufweist.

10. Autokindersitz nach Anspruch 1, **dadurch gekennzeichnet, dass** er über Mittel zum Steuern des Ein- und/oder Ausklinkens der besagten Rückholmittel verfügt, wobei mindestens ein Aspekt aus der folgenden Gruppe berücksichtigt wird:
- erfassen der Gegenwart eines Kindes auf dem besagten Sitz;
- erfassen der Verriegelung des Sicherheitsgurtsystems des besagten Sitzes;
- ein Befehl eines Benutzers.
